# EUROPEAN PATENT SPECIFICATION

(11) **EP 2 925 045 B1**
(45) Date of publication and mention of the grant of the patent: **22.02.2017**
(21) Application number: 12890702.9
(22) Date of filing: 25.12.2012
(51) Int. Cl.: H04W 28/00, H04J 13/20, H04B 1/707

(54) **COMPRESSION MODE ACTIVATION METHOD, NETWORK SIDE DEVICE AND TERMINAL DEVICE**
KOMPRESSIONSMODUSAKTIVIERUNGSVERFAHREN, NETZWERKSEITIGE VORRICHTUNG UND ENDGERÄTEVORRICHTUNG
PROCÉDÉ D'ACTIVATION DE MODE DE COMPRESSION, DISPOSITIF CÔTÉ RÉSEAU ET DISPOSITIF TERMINAL

(43) Date of publication of application: 30.09.2015
(73) Proprietor: Huawei Technologies Co., Ltd., Longgang District Shenzhen, Guangdong 518129 (CN)
(72) Inventor: WANG, Xiaoxia, Shenzhen Guangdong 518129 (CN)
(74) Representative: Pfenning, Meinig & Partner mbB
(86) International application number: PCT/CN2012/087421
(87) International publication number: WO 2014/100974

(56) References cited:
- EP-A2- 2 169 869
- WO-A1-2005/064832
- CN-A- 1 886 924
- KR-A- 20010 047 393

## Description

### TECHNICAL FIELD

The present invention relates to communications technologies, and in particular, to a compressed mode starting method, a network side device, and a terminal device.

### BACKGROUND

In a Universal Mobile Telecommunications System (Universal Mobile Telecommunications System, UTMS for short), each cell uses one primary scrambling code, so as to differentiate a signal of the cell from a signal of a neighboring cell. In each cell, each downlink dedicated physical channel (Dedicated Physical Channel, DPCH for short) needs to use one channel code, so that each downlink dedicated physical channel is differentiated from another DPCH in the cell. Each channel code corresponds to one spreading factor, and there is a limitation on a range of a rate supported by each channel code. If a data transmission rate of a DPCH channel needs to be increased, a channel code with a smaller spreading factor generally needs to be used.

WO 2005/064832 A1 discloses a method and apparatus in which when a UE needs to measure pilot signal strength of an inter-frequency cell or an inter-RAT cell and the UE has only one sole carrier frequency receiver, the UE needs to use a compressed mode. A compressed mode is a mechanism in which an idle frame is generated in a radio frame so that a UE can measure quality of another carrier frequency signal by using these idle frames. One of the widely used compressed modes is a compressed mode by spreading factor (SF)/2, that is, an SF is halved to increase a channel rate and transmit same data in a shorter time, so as to generate a transmission gap to measure pilot signal strength of an inter-frequency cell or an inter-RAT cell. If a neighboring code word of a channel code used by a DPCH of the UE is occupied by a DPCH of another UE, a channel code with a halved SF must be acquired in a manner of replacing a scrambling code, where the channel code with a halved SF is a father channel code of the channel code used by the DPCH of the UE. The manner of replacing a scrambling code increases cell interference, which increases transmit power or reduces a throughput rate of a cell.

### SUMMARY

Embodiments of the present invention provide a compressed mode starting method, a network side device, and a terminal device, which are used to reduce cell interference caused by compressed mode starting, thereby reducing transmit power of a cell or increasing a throughput rate of a cell.

A first aspect provides a compressed mode starting method, including:
when a network side device determines that a terminal device needs to start a compressed mode by spreading factor SF/2, acquiring, by the network side device from a channel code of a cell in which the terminal device is located, a second channel code that is idle and that has an SF the same as that of a father channel code of a first channel code, where the first channel code is a channel code used by a dedicated physical channel DPCH of the terminal device; and
sending, by the network side device, the second channel code to the terminal device, so that the terminal device configures the second channel code as the channel code that is used by the DPCH; and sending instruction information to the terminal device, so as to instruct the terminal device to start the compressed mode by SF/2 after the terminal device configures the second channel code as the channel code that is used by the DPCH.

With reference to the first aspect, in a first possible implementation manner of the first aspect, the when a network side device determines that a terminal device needs to start a compressed mode by spreading factor SF/2, acquiring, by the network side device from a channel code of a cell in which the terminal device is located, a second channel code that is idle and that has an SF the same as that of a father channel code of a first channel code includes:
when the network side device determines that the terminal device needs to start the compressed mode by SF/2 and the network side device determines that a neighboring channel code of the first channel code is occupied, acquiring, by the network side device from the channel code of the cell in which the terminal device is located, the second channel code that is idle and that has an SF the same as that of the father channel code of the first channel code.

With reference to the first aspect or the first possible implementation manner of the first aspect, in a second possible implementation manner of the first aspect, the sending, by the network side device, the second channel code to the terminal device, so that the terminal device configures the second channel code as the channel code that is used by the DPCH; and sending instruction information to the terminal device, so as to instruct the terminal device to start the compressed mode by SF/2 after the terminal device configures the second channel code as the channel code that is used by the DPCH, includes:
sending, by the network side device, a first physical channel reconfiguration message to the terminal device, where the first physical channel reconfiguration message carries the second channel code and the instruction information, so that the terminal device reconfigures the second channel code as the channel code that is used by the DPCH, and starts the compressed mode by SF/2 after the terminal device reconfigures the second channel code as the channel code that is used by the DPCH.

With reference to the first aspect or the first possible implementation manner of the first aspect, in a third possible implementation manner of the first aspect, the sending, by the network side device, the second channel code to the terminal device, so that the terminal device configures the second channel code as the channel code that is used by the DPCH; and sending instruction information to the terminal device, so as to instruct the terminal device to start the compressed mode by SF/2 after the terminal device configures the second channel code as the channel code that is used by the DPCH, includes:
sending, by the network side device, a second physical channel reconfiguration message to the terminal device, where the second physical channel reconfiguration message carries the second channel code, so that the terminal device configures the second channel code as the channel code that is used by the DPCH; and
sending, by the network side device, a third physical channel reconfiguration message to the terminal device, where the third physical channel reconfiguration message carries the instruction information, so as to instruct the terminal device to start the compressed mode by SF/2 after the terminal device configures the second channel code as the channel code that is used by the DPCH.

With reference to the first aspect or the first possible implementation manner of the first aspect or the second possible implementation manner of the first aspect or the third possible implementation manner of the first aspect, in a fourth possible implementation manner of the first aspect, the instruction information includes a compressed mode starting identifier and starting time, where the compressed mode starting identifier is used to instruct the terminal device to start the compressed mode by SF/2, and the starting time is used to indicate a time when the terminal device starts the compressed mode by SF/2 after the terminal device configures the second channel code as the channel code that is used by the DPCH.

A second aspect provides a compressed mode starting method, including:
receiving, by a terminal device, a second channel code sent by a network side device, and receiving instruction information sent by the network side device, where the second channel code is a channel code that is idle, that has an SF the same as that of a father channel code of a first channel code, and that is acquired, when the network side device determines that the terminal device needs to start a compressed mode by spreading factor SF/2, by the network side device from a channel code of a cell in which the terminal device is located; and the first channel code is a channel code used by a dedicated physical channel DPCH of the terminal device;
configuring, by the terminal device according to the second channel code, the second channel code as the channel code that is used by the DPCH; and
after the terminal device configures the second channel code as the channel code that is used by the DPCH, starting, by the terminal device, the compressed mode by SF/2 according to the instruction information.

With reference to the second aspect, in a first possible implementation manner of the second aspect, the receiving, by a terminal device, a second channel code sent by a network side device, and receiving instruction information sent by the network side device includes:
receiving, by the terminal device, a first physical channel reconfiguration message sent by the network side device, where the first physical channel reconfiguration message carries the second channel code and the instruction information.

With reference to the second aspect, in a second possible implementation manner of the second aspect, the receiving, by a terminal device, a second channel code sent by a network side device, and receiving instruction information sent by the network side device includes:
receiving, by the terminal device, a second physical channel reconfiguration message sent by the network side device, where the second physical channel reconfiguration message carries the second channel code; and
receiving, by the terminal device, a third physical channel reconfiguration message sent by the network side device, where the third physical channel reconfiguration message carries the instruction information.

With reference to the second aspect or the first possible implementation manner of the second aspect or the second possible implementation manner of the second aspect, in a third possible implementation manner of the second aspect, the instruction information includes a compressed mode starting identifier and starting time, where the compressed mode starting identifier is used to instruct the terminal device to start the compressed mode by SF/2, and the starting time is used to indicate a time when the terminal device starts the compressed mode by SF/2.

A third aspect provides a network side device, including:
an acquiring module, configured to: when it is determined that a terminal device needs to start a compressed mode by spreading factor SF/2, acquire, from a channel code of a cell in which the terminal device is located, a second channel code that is idle and that has an SF the same as that of a father channel code of a first channel code, where the first channel code is a channel code used by a dedicated physical channel DPCH of the terminal device; and
a sending module, configured to send the second channel code to the terminal device, so that the terminal device configures the second channel code as the channel code that is used by the DPCH; and send instruction information to the terminal device, so as to instruct the terminal device to start the compressed mode by SF/2 after the terminal device configures the second channel code as the channel code that is used by the DPCH.

With reference to the third aspect, in a first possible implementation manner of the third aspect, the acquiring module is specifically configured to: when it is determined that the terminal device needs to start the compressed mode by SF/2 and it is determined that a neighboring channel code of the first channel code is occupied, acquire, from the channel code of the cell in which the terminal device is located, the second channel code that is idle and that has an SF the same as that of the father channel code of the first channel code.

With reference to the third aspect or the first possible implementation manner of the third aspect, in a second possible implementation manner of the third aspect, the sending module is specifically configured to send a first physical channel reconfiguration message to the terminal device, where the first physical channel reconfiguration message carries the second channel code and the instruction information, so that the terminal device configures the second channel code as the channel code that is used by the DPCH, and starts the compressed mode by SF/2 after the terminal device configures the second channel code as the channel code that is used by the DPCH.

With reference to the third aspect or the first possible implementation manner of the third aspect, in a third possible implementation manner of the third aspect, the sending module is specifically configured to send a second physical channel reconfiguration message to the terminal device, where the second physical channel reconfiguration message carries the second channel code, so that the terminal device configures the second channel code as the channel code that is used by the DPCH; and send a third physical channel reconfiguration message to the terminal device, where the third physical channel reconfiguration message carries the instruction information, so as to instruct the terminal device to start the compressed mode by SF/2 after the terminal device configures the second channel code as the channel code that is used by the DPCH.

With reference to the third aspect or the first possible implementation manner of the third aspect or the second possible implementation manner of the third aspect or the third possible implementation manner of the third aspect, in a fourth possible implementation manner of the third aspect, the instruction information includes a compressed mode starting identifier and starting time, where the compressed mode starting identifier is used to instruct the terminal device to start the compressed mode by SF/2, and the starting time is used to indicate a time when the terminal device starts the compressed mode by SF/2 after the terminal device configures the second channel code as the channel code that is used by the DPCH.

A fourth aspect provides a terminal device, including:
a receiving module, configured to receive a second channel code sent by a network side device, and receive instruction information sent by the network side device, where the second channel code is a channel code that is idle, that has an SF the same as that of a father channel code of a first channel code, and that is acquired, when the network side device determines that the terminal device needs to start a compressed mode by spreading factor SF/2, by the network side device from a channel code of a cell in which the terminal device is located; and the first channel code is a channel code used by a dedicated physical channel DPCH of the terminal device;
a configuring module, configured to configure, according to the second channel code, the second channel code as the channel code that is used by the DPCH; and
a starting module, configured to start the compressed mode by SF/2 according to the instruction information after the configuring module configures the second channel code as the channel code that is used by the DPCH.

With reference to the fourth aspect, in a first possible implementation manner of the fourth aspect, the receiving module is specifically configured to receive a first physical channel reconfiguration message sent by the network side device, where the first physical channel reconfiguration message carries the second channel code and the instruction information.

With reference to the fourth aspect, in a second possible implementation manner of the fourth aspect, the receiving module is specifically configured to receive a second physical channel reconfiguration message sent by the network side device, where the second physical channel reconfiguration message carries the second channel code; and receive a third physical channel reconfiguration message sent by the network side device, where the third physical channel reconfiguration message carries the instruction information.

With reference to the fourth aspect or the first possible implementation manner of the fourth aspect or the second possible implementation manner of the fourth aspect, in a third possible implementation manner of the fourth aspect, the instruction information includes a compressed mode starting identifier and starting time, where the compressed mode starting identifier is used to instruct the terminal device to start the compressed mode by SF/2, and the starting time is used to indicate a time when the terminal device starts the compressed mode by SF/2.

A fifth aspect provides a network side device, including:
a memory, configured to store a program;
a processor, configured to execute the program, so as to: when determining that a terminal device needs to start a compressed mode by spreading factor SF/2, acquire, from a channel code of a cell in which the terminal device is located, a second channel code that is idle and that has an SF the same as that of a father channel code of a first channel code, where the first channel code is a channel code used by a dedicated physical channel DPCH of the terminal device; and
a communications interface, configured to send the second channel code to the terminal device, so that the terminal device configures the second channel code as the channel code that is used by the DPCH; and send instruction information to the terminal device, so as to instruct the terminal device to start the compressed mode by SF/2 after the terminal device configures the second channel code as the channel code that is used by the DPCH.

A sixth aspect provides a terminal device, including:
a communications interface, configured to receive a second channel code sent by a network side device, and receive instruction information sent by the network side device, where the second channel code is a channel code that is idle, that has an SF the same as that of a father channel code of a first channel code, and that is acquired, when the network side device determines that the terminal device needs to start a compressed mode by spreading factor SF/2, by the network side device from a channel code of a cell in which the terminal device is located; and the first channel code is a channel code used by a dedicated physical channel DPCH of the terminal device;
a memory, configured to store a program; and
a processor, configured to execute the program, so as to configure, according to the second channel code, the second channel code as the channel code that is used by the DPCH, and start the compressed mode by SF/2 according to the instruction information after configuring the second channel code as the channel code that is used by the DPCH.

According to the compressed mode starting method, the network side device and the terminal device that are provided by the embodiments of the present invention, when a network side device determines that a terminal device needs to start a compressed mode by SF/2, the network side device acquires, from a channel code of a cell in which the terminal device is located, a channel code that is idle and that has an SF the same as that of a father channel code of a channel code used by a DPCH of the terminal device; then, the network side device sends the acquired idle channel code to the terminal device, so that the terminal device configures the idle channel code as the channel code that is used by the DPCH of the terminal device; and the network side device sends instruction information to the terminal device, so that the terminal device starts the compressed mode by SF/2 after the terminal device configures the idle channel code as the channel code that is used by the DPCH. In the technical solutions of the present invention, a channel code used by a DPCH of a terminal device rather than a scrambling code is replaced. Because orthogonality between channel codes is far greater than orthogonality between scrambling codes, compared with a manner of replacing a scrambling code in the prior art, the technical solutions of the present invention can reduce cell interference caused by compressed mode starting, thereby reducing transmit power of a cell or increasing a throughput rate of a cell.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of a compressed mode starting method according to an embodiment of the present invention;
FIG. 2 to FIG. 4 are schematic diagrams of a relationship between channel codes in a method for replacing a scrambling code according to an embodiment of the present invention;
FIG. 5 to FIG. 7 are schematic diagrams of a relationship between channel codes in a method for replacing a channel code according to an embodiment of the present invention;
FIG. 8 is a flowchart of another compressed mode starting method according to an embodiment of the present invention;
FIG. 9 is a schematic structural diagram of a network side device according to an embodiment of the present invention;
FIG. 10 is a schematic structural diagram of another network side device according to an embodiment of the present invention;
FIG. 11 is a schematic structural diagram of a terminal device according to an embodiment of the present invention; and
FIG. 12 is a schematic structural diagram of another terminal device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

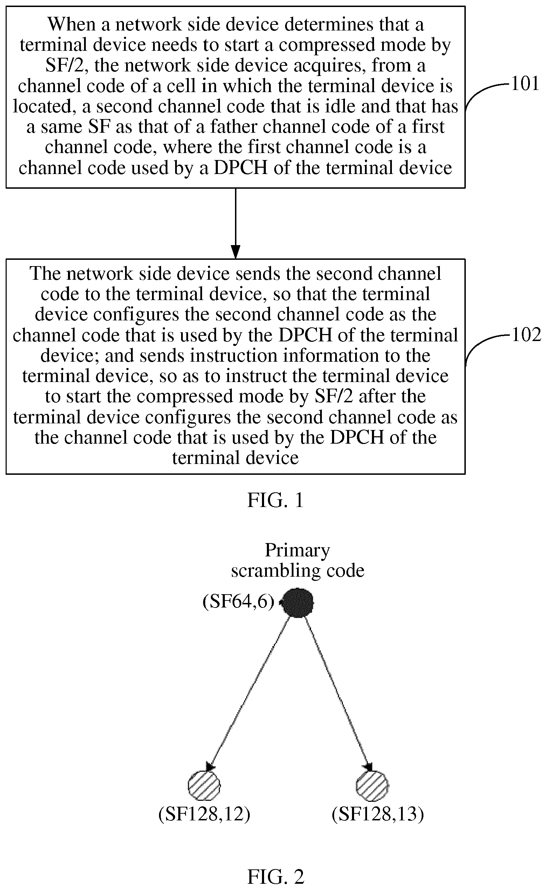

FIG. 1 is a flowchart of a compressed mode starting method according to an embodiment of the present invention. As shown in FIG. 1, the method in this embodiment includes:
Step 101: When a network side device determines that a terminal device needs to start a compressed mode by SF/2, the network side device acquires, from a channel code of a cell in which the terminal device is located, a second channel code that is idle and that has an SF the same as that of a father channel code of a first channel code, where the first channel code is a channel code used by a DPCH of the terminal device.
Step 102: The network side device sends the second channel code to the terminal device, so that the terminal device configures the second channel code as the channel code that is used by the DPCH of the terminal device; and sends instruction information to the terminal device, so as to instruct the terminal device to start the compressed mode by SF/2 after the terminal device configures the second channel code as the channel code that is used by the DPCH of the terminal device.

In this embodiment, the network side device may be, but is not limited to, a radio network controller (Radio Network Controller, RNC for short). The network side device may determine, according to information such as a capability of the terminal device and a service requirement of the terminal device, whether the terminal device needs to start the compressed mode by SF/2. For example, when the terminal device needs to measure pilot signal strength of an inter-frequency cell or an inter-RAT cell and the terminal device has only one sole carrier frequency receiver, the network side device may determine that the terminal device needs to start the compressed mode by SF/2.

In this embodiment, for ease of differentiation, a channel code currently used by the DPCH of the terminal device is referred to as the first channel code, and a channel code, which is reselected by the network side device for the DPCH of the terminal device from the channel code of the cell in which the terminal device is located, is referred to as the second channel code. An SF of the second channel code is the same as an SF of the father channel code of the first channel code, that is, the second channel code and the father channel code of the first channel code are channel codes of a same level; and the second channel code is idle, that is, neither of two sub channel codes of the second channel code is occupied by another DPCH.

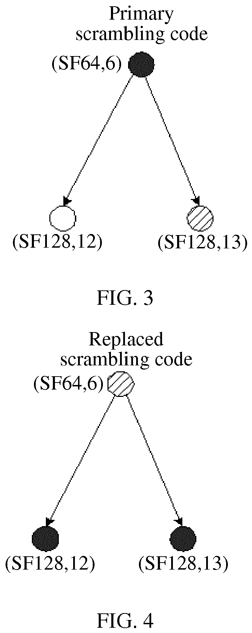

For the compressed mode by SF/2, if a neighboring channel code of the channel code used by the DPCH of the terminal device is occupied by another DPCH, the terminal device cannot directly use the compressed mode by SF/2, and the terminal device can use the compressed mode by SF/2 only after a scrambling code is replaced. In the following, that a terminal device bearing an adaptive multi-rate (Adaptive Multi-Rate, AMR for short) voice service needs to start a compressed mode by SF/2 is used as an example for description. As shown in FIG. 2, it is assumed that a first channel code used by a DPCH of the terminal device bearing an AMR voice service is a channel code whose SF is 128 and whose number is 12, and the first channel code is marked as (SF128, 12). When the terminal device needs to start the compressed mode by SF/2, a father channel code (SF64, 6) with a halved SF is unavailable because a neighboring channel code (SF128, 13) of the first channel code is occupied by another DPCH, as shown in FIG. 3. In the prior art, the terminal device replaces a used primary scrambling code, and with the primary scrambling code, the father channel code (SF64, 6) with a halved SF is used, so as to implement the compressed mode by SF/2, as shown in FIG. 4. In FIG. 2 to FIG. 4, a circle with oblique lines represents an occupied channel code, a black circle represents an unavailable channel code, and a blank circle represents a reserved channel code. The first channel code (SF128, 12) used by the terminal device is reserved. After the compressed mode by SF/2 ends, the first channel code can be reused.

Because of relatively low orthogonality between scrambling codes, replacing a scrambling code increases cell interference, which increases transmit power or reduces a throughput rate of a cell. Therefore, in this embodiment, when the network side device determines that the terminal device needs to start the compressed mode by SF/2 and the network side device determines that a neighboring channel code of the first channel code is occupied, the network side device acquires, from the channel code of the cell in which the terminal device is located, the second channel code that is idle and that has an SF the same as that of the father channel code of the first channel code. Both the channel code of the cell in which the terminal device is located and the channel code used by the DPCH of the terminal device are configured by the network side device. Therefore, the network side device knows usage of the channel code of the cell in which the terminal device is located, and also knows usage of the neighboring channel code of the first channel code used by the DPCH of the terminal device.

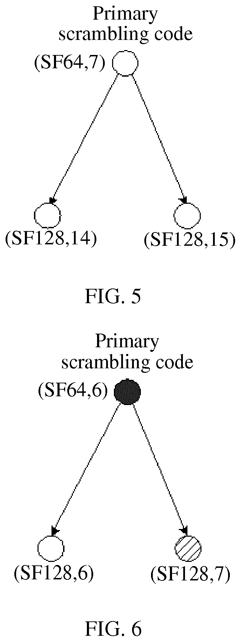

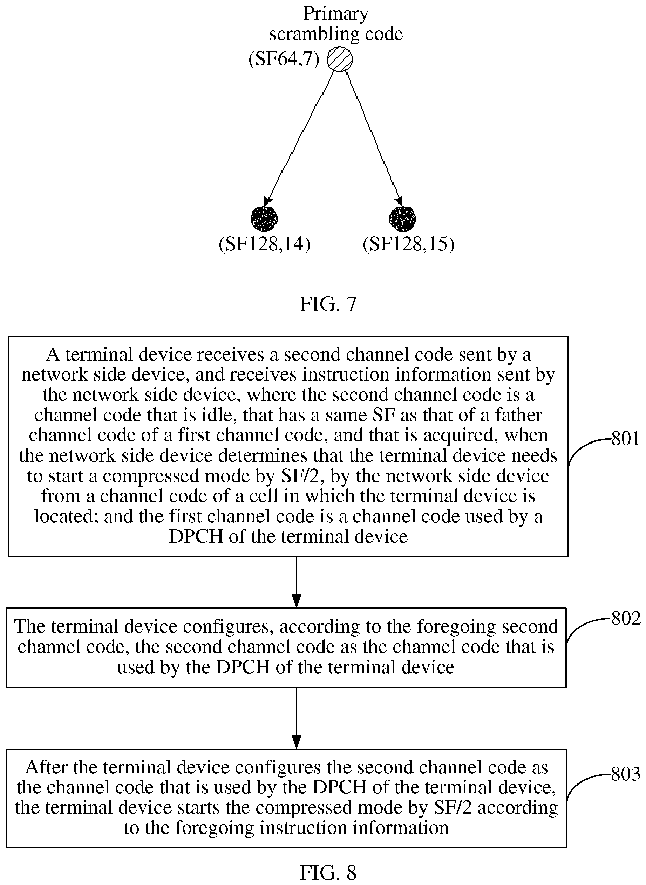

The terminal device bearing an AMR voice service is still used as an example. As shown in FIG. 5, the network side device acquires the second channel code (SF64, 7) from the channel code of the cell in which the terminal device is located, where an SF of the second channel code is also 64 and is the same as that of the father channel code of the first channel code, and the second channel code is idle. In this embodiment, the network side device sends the second channel code to the terminal device, so that the terminal reconfigures the second channel code as the channel code that is used by the DPCH of the terminal device, and implements the compressed mode by SF/2 based on the second channel code, as shown in FIG. 6. As shown in FIG. 7, the first channel code (SF128, 12) used by the terminal device is reserved; and after the compressed mode by SF/2 ends, the first channel code can be reused. In FIG. 5 to FIG. 7, a circle with oblique lines represents an occupied channel code, a black circle represents an unavailable channel code, and a blank circle represents a reserved channel code.

In the foregoing description, the network side device acquires a second channel code for the DPCH of the terminal device from the channel code of the cell in which the terminal device is located, only in a case in which the network side device determines that the terminal device needs to start the compressed mode by SF/2 and in which the neighboring channel code of the first channel code used by the DPCH of the terminal device is occupied, but the present invention is not limited thereto. For example, the network side device may also reselect a second channel code for the DPCH of the terminal device from the channel code of the cell in which the terminal device is located, in a case in which the network side device determines that the terminal device needs to start the compressed mode by SF/2 and in which the neighboring channel code of the first channel code used by the DPCH of the terminal device is idle. To achieve compatibility with the prior art, the network side device may not reselect a channel code for the DPCH of the terminal device but directly instruct the terminal device to start the compressed mode by SF/2, in a case in which the network side device determines that the terminal device needs to start the compressed mode by SF/2 and in which the neighboring channel code of the first channel code used by the DPCH of the terminal device is idle.

In an optional implementation manner, one implementation manner of step 102 includes: sending, by the network side device, a first physical channel reconfiguration message to the terminal device, where the first physical channel reconfiguration message carries the second channel code and instruction information, so that the terminal device configures the second channel code as the channel code that is used by the DPCH, and starts the compressed mode by SF/2 after the terminal device configures the second channel code as the channel code that is used by the DPCH. In this implementation manner, the network side device sends both the second channel code and the instruction information to the terminal device by using one physical channel reconfiguration message.

In an optional implementation manner, the other implementation manner of step 102 includes: sending, by the network side device, a second physical channel reconfiguration message to the terminal device, where the second physical channel reconfiguration message carries the second channel code, so that the terminal device configures the second channel code as the channel code that is used by the DPCH; and sending, by the network side device, a third physical channel reconfiguration message to the terminal device, where the third physical channel reconfiguration message carries instruction information, so as to instruct the terminal device to start the compressed mode by SF/2 after the terminal device configures the second channel code as the channel code that is used by the DPCH. In this implementation manner, the network side device separately sends the second channel code and the instruction information to the terminal device by using different physical channel reconfiguration messages.

Based on the foregoing embodiment or implementation manners, the instruction information may include, but is not limited to, a compressed mode starting identifier and starting time. In this embodiment, the compressed mode starting identifier is used to instruct the terminal device to start the compressed mode by SF/2, and the starting time is used to indicate a time when the terminal device starts the compressed mode by SF/2. In specific implementation, the starting time may be a specific time point at which the terminal device starts the compressed mode by SF/2 after the terminal device configures the second channel code as the channel code that is used by the DPCH; or the starting time may be a time interval, which is used to instruct the terminal device to start the compressed mode by SF/2 after a certain time interval after the terminal device configures the second channel code as the channel code that is used by the DPCH.

As described above, after a network side device determines that a terminal device needs to start a compressed mode by SF/2, the network side device acquires, from a channel code of a cell in which the terminal device is located, a channel code that is idle and that has an SF the same as that of a father channel code of a channel code used by a DPCH of the terminal device; then, the network side device sends the acquired idle channel code to the terminal device, so that the terminal device configures the idle channel code as the channel code that is used by the DPCH of the terminal device; and the network side device sends instruction information to the terminal device, so that the terminal device starts the compressed mode by SF/2 after the terminal device configures the idle channel code as the channel code that is used by the DPCH. The compressed mode by SF/2 is implemented by replacing the channel code used by the DPCH of the terminal device rather than replacing a scrambling code. Because orthogonality between channel codes is far greater than orthogonality between scrambling codes, compared with a manner of replacing a scrambling code in the prior art, the technical solution of the present invention can reduce cell interference caused by compressed mode starting, thereby reducing transmit power of a cell or increasing a throughput rate of a cell.

FIG. 8 is a flowchart of another compressed mode starting method according to an embodiment of the present invention. As shown in FIG. 8, the method in this embodiment includes:
Step 801: A terminal device receives a second channel code sent by a network side device, and receives instruction information sent by the network side device, where the second channel code is a channel code that is idle, that has an SF the same as that of a father channel code of a first channel code, and that is acquired, when the network side device determines that the terminal device needs to start a compressed mode by SF/2, by the network side device from a channel code of a cell in which the terminal device is located; and the first channel code is a channel code used by a DPCH of the terminal device.

In this embodiment, the instruction information is used to instruct the terminal device to start the compressed mode by SF/2 after the terminal device configures the second channel code as the channel code that is used by the DPCH of the terminal device.
Step 802: The terminal device configures, according to the foregoing second channel code, the second channel code as the channel code that is used by the DPCH of the terminal device.
Step 803: After the terminal device configures the second channel code as the channel code that is used by the DPCH of the terminal device, the terminal device starts the compressed mode by SF/2 according to the foregoing instruction information.

In this embodiment, the network side device may be, but is not limited to, an RNC. The network side device may determine, according to information such as a capability of the terminal device and a service requirement of the terminal device, whether the terminal device needs to start the compressed mode by SF/2. For example, when the terminal device needs to measure pilot signal strength of an inter-frequency cell or an inter-RAT cell and the terminal device has only one sole carrier frequency receiver, the network side device may determine that the terminal device needs to start the compressed mode by SF/2.

In this embodiment, for ease of differentiation, a channel code currently used by the DPCH of the terminal device is referred to as the first channel code, and a channel code, which is reselected by the network side device for the DPCH of the terminal device from the channel code of the cell in which the terminal device is located, is referred to as the second channel code. An SF of the second channel code is the same as an SF of the father channel code of the first channel code, that is, the second channel code and the father channel code of the first channel code are channel codes of a same level; and the second channel code is idle, that is, neither of two sub channel codes of the second channel code is occupied by another DPCH.

For the compressed mode by SF/2, if a neighboring channel code of the channel code used by the DPCH of the terminal device is occupied by another DPCH, the terminal device cannot directly use the compressed mode by SF/2, and the terminal device can use the compressed mode by SF/2 only after a scrambling code is replaced. Based on this, the second channel code that is idle, that has an SF the same as that of the father channel code of a first channel code, and that is acquired, when the network side device determines that the terminal device needs to start the compressed mode by SF/2, by the network side device from the channel code of the cell in which the terminal device is located, includes: a second channel code that is idle, that has an SF the same as that of the father channel code of the first channel code, and that is acquired, when the network side device determines that the terminal device needs to start the compressed mode by SF/2 and the network side device determines that a neighboring channel code of the first channel code used by the DPCH of the terminal device is occupied, by the network side device from the channel code of the cell in which the terminal device is located. Both the channel code of the cell in which the terminal device is located and the channel code used by the DPCH of the terminal device are configured by the network side device. Therefore, the network side device knows usage of the channel code of the cell in which the terminal device is located, and also knows usage of the neighboring channel code of the first channel code used by the DPCH of the terminal device. Correspondingly, the second channel code received by the terminal device is a channel code that is idle, that has an SF the same as that of the father channel code of the first channel code, and that is acquired, when the network side device determines that the terminal device needs to start the compressed mode by SF/2 and the network side device determines that the neighboring channel code of the first channel code used by the DPCH of the terminal device is occupied, by the network side device from the channel code of the cell in which the terminal device is located, where the second channel code is used to instruct the terminal device to configure the second channel code as the channel code that is used by the DPCH of the terminal device.

In another optional implementation manner, when the network side device determines that the terminal device needs to start the compressed mode by SF/2 and the network side device determines that the neighboring channel code of the first channel code used by the DPCH of the terminal device is not occupied, the network side device may also acquire, from the channel code of the cell in which the terminal device is located, the second channel code that is idle and that has an SF the same as that of the father channel code of the first channel code; and the network side device sends the second channel code to the terminal device, so that the terminal device configures the second channel code as the channel code that is used by the DPCH of the terminal device, thereby further implementing the compressed mode by SF/2.

In an optional implementation manner, one implementation manner of step 801 includes: receiving, by the terminal device, a first physical channel reconfiguration message sent by the network side device, where the first physical channel reconfiguration message carries the second channel code and the instruction information. In this implementation manner, the network side device sends both the second channel code and the instruction information to the terminal device by using one physical channel reconfiguration message.

In an optional implementation manner, another implementation manner of step 801 includes: receiving, by the terminal device, a second physical channel reconfiguration message sent by the network side device, where the second physical channel reconfiguration message carries the second channel code; and receiving, by the terminal device, a third physical channel reconfiguration message sent by the network side device, where the third physical channel reconfiguration message carries the instruction information. In this implementation manner, the network side device separately sends the second channel code and the instruction information to the terminal device by using different physical channel reconfiguration messages.

Based on the foregoing embodiment or implementation manners, the instruction information may include, but is not limited to, a compressed mode starting identifier and starting time. In this embodiment, the compressed mode starting identifier is used to instruct the terminal device to start the compressed mode by SF/2, and the starting time is used to indicate a time when the terminal device starts the compressed mode by SF/2. In specific implementation, the starting time may be a specific time point at which the terminal device starts the compressed mode by SF/2 after the terminal device configures the second channel code as the channel code that is used by the DPCH. In this case, the terminal device may start the compressed mode by SF/2 at a time point indicated by the starting time. Alternatively, the starting time may be a time interval, which is used to instruct the terminal device to start the compressed mode by SF/2 after a certain time interval after the terminal device configures the second channel code as the channel code that is used by the DPCH. In this case, after the terminal device configures the second channel code as the channel code that is used by the DPCH, the terminal device starts the compressed mode by SF/2 after a time interval indicated by the starting time.

As described above, a terminal device receives a channel code that is idle, that has an SF the same as that of a father channel code of a channel code used by a DPCH of the terminal device, and that is acquired, when a network side device determines that the terminal device needs to start a compressed mode by SF/2, by the network side device from a channel code of a cell in which the terminal device is located; the terminal device receives instruction information sent by the network side device; and then, the terminal device configures the idle channel code provided by the network side device as the channel code that is used by the DPCH of the terminal device, and starts the compressed mode by SF/2 after the terminal device configures the idle channel code as the channel code that is used by the DPCH. The compressed mode by SF/2 is implemented by replacing the channel code used by the DPCH rather than replacing a scrambling code. Because orthogonality between channel codes is far greater than orthogonality between scrambling codes, compared with a manner of replacing a scrambling code in the prior art, the technical solution of the present invention can reduce cell interference caused by compressed mode starting, thereby reducing transmit power of a cell or increasing a throughput rate of a cell.

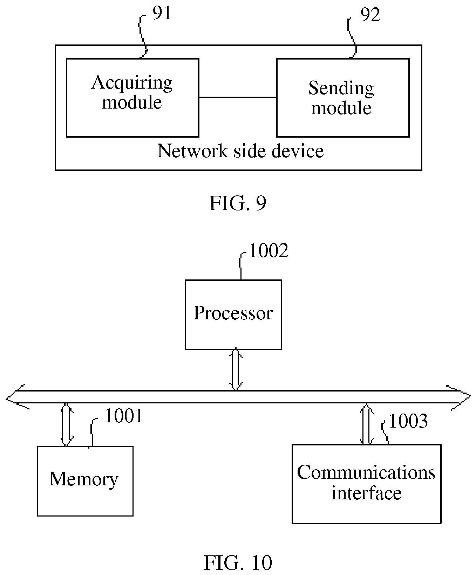

FIG. 9 is a schematic structural diagram of a network side device according to an embodiment of the present invention. As shown in FIG. 9, a network side device in this embodiment includes an acquiring module 91 and a sending module 92.

The acquiring module 91 is configured to: when it is determined that a terminal device needs to start a compressed mode by SF/2, acquire, from a channel code of a cell in which the terminal device is located, a second channel code that is idle and that has an SF the same as that of a father channel code of a first channel code, where the first channel code is a channel code used by a DPCH of the terminal device.

The sending module 92, which is connected to the acquiring module 91, is configured to send the second channel code acquired by the acquiring module 91 to the terminal device, so that the terminal device configures the second channel code as the channel code that is used by the DPCH; and send instruction information to the terminal device, so as to instruct the terminal device to start the compressed mode by SF/2 after the terminal device configures the second channel code as the channel code that is used by the DPCH.

In an optional implementation manner, the acquiring module 91 may be specifically configured to: when it is determined that the terminal device needs to start the compressed mode by SF/2 and it is determined that a neighboring channel code of the first channel code is occupied, acquire, from the channel code of the cell in which the terminal device is located, the second channel code that is idle and that has an SF the same as that of the father channel code of the first channel code.

In an optional implementation manner, the sending module 92 may be specifically configured to send a first physical channel reconfiguration message to the terminal device, where the first physical channel reconfiguration message carries the second channel code and the instruction information, so that the terminal device configures the second channel code as the channel code that is used by the DPCH, and starts the compressed mode by SF/2 after the terminal device configures the second channel code as the channel code that is used by the DPCH.

In an optional implementation manner, the sending module 92 may be specifically configured to send a second physical channel reconfiguration message to the terminal device, where the second physical channel reconfiguration message carries the second channel code, so that the terminal device configures the second channel code as the channel code that is used by the DPCH; and send a third physical channel reconfiguration message to the terminal device, where the third physical channel reconfiguration message carries the instruction information, so as to instruct the terminal device to start the compressed mode by SF/2 after the terminal device configures the second channel code as the channel code that is used by the DPCH.

The instruction information may include, but is not limited to, a compressed mode starting identifier and starting time, where the compressed mode starting identifier is used to instruct the terminal device to start the compressed mode by SF/2, and the starting time is used to indicate a time when the terminal device starts the compressed mode by SF/2 after the terminal device configures the second channel code as the channel code that is used by the DPCH.

The functional modules of the network side device provided in this embodiment may be used to execute the processes of the foregoing compressed mode starting method embodiments. Specific working principles are not described again. For details, refer to the description in the method embodiments.

When the network side device provided in this embodiment determines that a terminal device needs to start a compressed mode by SF/2, the network side device acquires, from a channel code of a cell in which the terminal device is located, a channel code that is idle and that has an SF the same as that of a father channel code of a channel code used by a DPCH of the terminal device; then, the network side device sends the acquired idle channel code to the terminal device, so that the terminal device configures the idle channel code as the channel code that is used by the DPCH of the terminal device; and the network side device sends instruction information to the terminal device, so that the terminal device starts the compressed mode by SF/2 after the terminal device configures the idle channel code as the channel code that is used by the DPCH. The compressed mode by SF/2 is implemented by replacing the channel code used by the DPCH of the terminal device rather than replacing a scrambling code. Because orthogonality between channel codes is far greater than orthogonality between scrambling codes, compared with a manner of replacing a scrambling code in the prior art, the technical solution of the present invention can reduce cell interference caused by compressed mode starting, thereby reducing transmit power of a cell or increasing a throughput rate of a cell.

FIG. 10 is a schematic structural diagram of another network side device according to an embodiment of the present invention. As shown in FIG. 10, the network side device in this embodiment includes a memory 1001, a processor 1002, and a communications interface 1003.

The memory 1001 is configured to store a program. Specifically, the program may include program code, where the program code includes a computer operation instruction. The memory 1001 may include a high speed RAM memory, and may also include a non-volatile memory (non-volatile memory), for example, at least one disk memory.

The processor 1002 is configured to execute the program stored by the memory 1001, so as to: when determining that a terminal device needs to start a compressed mode by SF/2, acquire, from a channel code of a cell in which the terminal device is located, a second channel code that is idle and that has an SF the same as that of a father channel code of a first channel code, where the first channel code is a channel code used by a DPCH of the terminal device.

The processor 1002 may include one or more central processing units (Central Processing Unit, CPU for short), or an application specific integrated circuit (Application Specific Integrated Circuit, ASIC for short), or one or more integrated circuits configured to implement this embodiment of the present invention.

The communications interface 1003 is configured to send the second channel code acquired by the processor 1002 to the terminal device, so that the terminal device configures the second channel code as the channel code that is used by the DPCH; and send instruction information to the terminal device, so as to instruct the terminal device to start the compressed mode by SF/2 after the terminal device configures the second channel code as the channel code that is used by the DPCH.

In an optional implementation manner, the processor 1002 may be specifically configured to: when determining that the terminal device needs to start the compressed mode by SF/2 and determining that a neighboring channel code of the first channel code is occupied, acquire, from the channel code of the cell in which the terminal device is located, the second channel code that is idle and that has an SF the same as that of the father channel code of the first channel code.

In an optional implementation manner, the communications interface 1003 may be specifically configured to send a first physical channel reconfiguration message to the terminal device, where the first physical channel reconfiguration message carries the second channel code and the instruction information, so that the terminal device configures the second channel code as the channel code that is used by the DPCH, and starts the compressed mode by SF/2 after the terminal device configures the second channel code as the channel code that is used by the DPCH.

In an optional implementation manner, the communications interface module 1003 may be specifically configured to send a second physical channel reconfiguration message to the terminal device, where the second physical channel reconfiguration message carries the second channel code, so that the terminal device configures the second channel code as the channel code that is used by the DPCH; and send a third physical channel reconfiguration message to the terminal device, where the third physical channel reconfiguration message carries the instruction information, so as to instruct the terminal device to start the compressed mode by SF/2 after the terminal device configures the second channel code as the channel code that is used by the DPCH.

The instruction information may include, but is not limited to, a compressed mode starting identifier and starting time, where the compressed mode starting identifier is used to instruct the terminal device to start the compressed mode by SF/2, and the starting time is used to indicate a time when the terminal device starts the compressed mode by SF/2 after the terminal device configures the second channel code as the channel code that is used by the DPCH.

Optionally, if the foregoing memory 1001, processor 1002 and communications interface 1003 are implemented independently, the memory 1001, the processor 1002 and the communications interface 1003 may be connected by using a bus to complete mutual communication. The bus may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus may be classified into an address bus, a data bus, a control bus, and the like. For ease of illustration, the bus in FIG. 10 is represented by using only one bold line, but it does not mean that there is only one bus or one type of bus.

If the foregoing memory 1001, processor 1002 and communications interface 1003 are integrated on one chip for implementation, the memory 1001, the processor 1002 and the communications interface 1003 may perform mutual communication by using an internal interface.

The network side device provided in this embodiment may be used to execute the processes of the foregoing compressed mode starting method embodiments. Specific working principles are not described again. For details, refer to the description in the method embodiments.

When the network side device provided in this embodiment determines that a terminal device needs to start a compressed mode by SF/2, the network side device acquires, from a channel code of a cell in which the terminal device is located, a channel code that is idle and that has an SF the same as that of a father channel code of a channel code used by a DPCH of the terminal device; then, the network side device sends the acquired idle channel code to the terminal device, so that the terminal device configures the idle channel code as the channel code that is used by the DPCH of the terminal device; and the network side device sends instruction information to the terminal device, so that the terminal device starts the compressed mode by SF/2 after the terminal device configures the idle channel code as the channel code that is used by the DPCH. The compressed mode by SF/2 is implemented by replacing the channel code used by the DPCH of the terminal device rather than replacing a scrambling code. Because orthogonality between channel codes is far greater than orthogonality between scrambling codes, compared with a manner of replacing a scrambling code in the prior art, the technical solution of the present invention can reduce cell interference caused by compressed mode starting, thereby reducing transmit power of a cell or increasing a throughput rate of a cell.

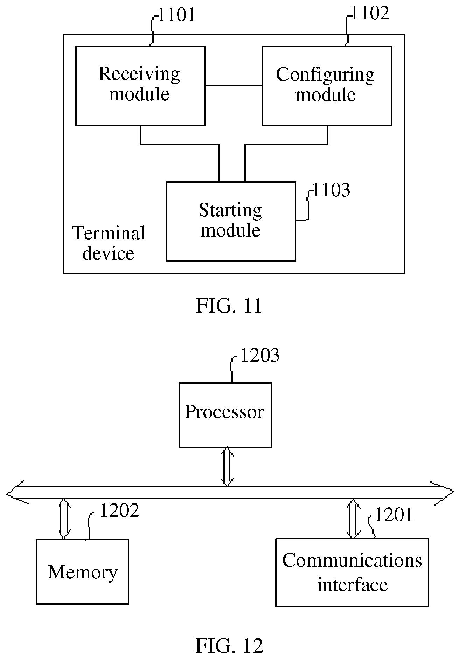

FIG. 11 is a schematic structural diagram of a terminal device according to an embodiment of the present invention. As shown in FIG. 11, the terminal device in this embodiment includes a receiving module 1101, a configuring module 1102, and a starting module 1103.

The receiving module 1101 is configured to receive a second channel code sent by a network side device, and receive instruction information sent by the network side device, where the second channel code is a channel code that is idle, that has an SF the same as that of a father channel code of a first channel code, and that is acquired, when the network side device determines that the terminal device in this embodiment needs to start a compressed mode by SF/2, by the network side device from a channel code of a cell in which the terminal device in this embodiment is located; and the first channel code is a channel code used by a DPCH of the terminal device in this embodiment. The instruction information is used to instruct the terminal device in this embodiment to start the compressed mode by SF/2 after the terminal device configures the second channel code as the channel code that is used by the DPCH of the terminal device.

The configuring module 1102, which is connected to the receiving module 1101, is configured to configure, according to the second channel code received by the receiving module 1101, the second channel code, which is received by the receiving module 1101, as the channel code that is used by the DPCH.

The starting module 1103, which is connected to the receiving module 1101 and the configuring module 1102, is configured to start, according to the instruction information received by the receiving module 1101, the compressed mode by SF/2 after the configuring module 1102 configures the second channel code as the channel code that is used by the DPCH.

In an optional implementation manner, the receiving module 1101 may be specifically configured to receive a first physical channel reconfiguration message sent by the network side device, where the first physical channel reconfiguration message carries the second channel code and the instruction information.

In an optional implementation manner, the receiving module 1101 may be specifically configured to receive a second physical channel reconfiguration message sent by the network side device, where the second physical channel reconfiguration message carries the second channel code; and receive a third physical channel reconfiguration message sent by the network side device, where the third physical channel reconfiguration message carries the instruction information.

The instruction information includes, but is not limited to, a compressed mode starting identifier and starting time, where the compressed mode starting identifier is used to instruct the terminal device in this embodiment to start the compressed mode by SF/2, and the starting time is used to indicate a time when the terminal device in this embodiment starts the compressed mode by SF/2.

The functional modules of the terminal device provided in this embodiment may be used to execute the processes of the foregoing compressed mode starting method embodiments. Specific working principles are not described again. For details, refer to the description in the method embodiments.

The terminal device provided in this embodiment receives a channel code that is idle, that has an SF the same as that of a father channel code of a channel code used by a DPCH of the terminal device, and that is acquired, when a network side device determines that the terminal device needs to start a compressed mode by SF/2, by the network side device from a channel code of a cell in which the terminal device is located; the terminal device receives instruction information sent by the network side device; and then, the terminal device configures the idle channel code provided by the network side device as the channel code that is used by the DPCH of the terminal device, and starts the compressed mode by SF/2 after the terminal device configures the idle channel code as the channel code that is used by the DPCH. The compressed mode by SF/2 is implemented by replacing the channel code used by the DPCH rather than replacing a scrambling code. Because orthogonality between channel codes is far greater than orthogonality between scrambling codes, compared with a manner of replacing a scrambling code in the prior art, the technical solution of the present invention can reduce cell interference caused by compressed mode starting, thereby reducing transmit power of a cell or increasing a throughput rate of a cell.

FIG. 12 is a schematic structural diagram of another terminal device according to an embodiment of the present invention. As shown in FIG. 12, the terminal device in this embodiment includes a communications interface 1201, a memory 1202, and a processor 1203.

The communications interface 1201 is configured to receive a second channel code sent by a network side device, and receive instruction information sent by the network side device, where the second channel code is a channel code that is idle, that has an SF the same as that of a father channel code of a first channel code, and that is acquired, when the network side device determines that the terminal device in this embodiment needs to start a compressed mode by SF/2, by the network side device from a channel code of a cell in which the terminal device in this embodiment is located; and the first channel code is a channel code used by a DPCH of the terminal device in this embodiment. The instruction information is used to instruct the terminal device in this embodiment to start the compressed mode by SF/2 after the terminal device configures the second channel code as the channel code that is used by the DPCH of the terminal device.

The memory 1202 is configured to store a program. Specifically, the program may include program code, where the program code includes a computer operation instruction. The memory 1202 may include a high speed RAM memory, and may also include a non-volatile memory (non-volatile memory), for example, at least one disk memory.

The processor 1203 is configured to execute the program stored by the memory 1202, so as to configure, according to the second channel code received by the communications interface 1201, the second channel code as the channel code that is used by the DPCH, and after configuring the second channel code as the channel code that is used by the DPCH, start the compressed mode by SF/2 according to the instruction information received by the communications interface 1201.

In an optional implementation manner, the communications interface 1201 may be specifically configured to receive a first physical channel reconfiguration message sent by the network side device, where the first physical channel reconfiguration message carries the second channel code and the instruction information.

In an optional implementation manner, the communications interface 1201 may be specifically configured to receive a second physical channel reconfiguration message sent by the network side device, where the second physical channel reconfiguration message carries the second channel code; and receive a third physical channel reconfiguration message sent by the network side device, where the third physical channel reconfiguration message carries the instruction information.

The instruction information includes, but is not limited to, a compressed mode starting identifier and starting time, where the compressed mode starting identifier is used to instruct the terminal device in this embodiment to start the compressed mode by SF/2, and the starting time is used to indicate a time when the terminal device in this embodiment starts the compressed mode by SF/2.

The terminal device provided in this embodiment may be used to execute the processes of the foregoing compressed mode starting method embodiments. Specific working principles are not described again. For details, refer to the description in the method embodiments.

The terminal device provided in this embodiment receives a channel code that is idle, that has an SF the same as that of a father channel code of a channel code used by a DPCH of the terminal device, and that is acquired, when a network side device determines that the terminal device needs to start a compressed mode by SF/2, by the network side device from a channel code of a cell in which the terminal device is located; the terminal device receives instruction information sent by the network side device; and then, the terminal device configures the idle channel code provided by the network side device as the channel code that is used by the DPCH of the terminal device, and starts the compressed mode by SF/2 after the terminal device configures the idle channel code as the channel code that is used by the DPCH. The compressed mode by SF/2 is implemented by replacing the channel code used by the DPCH rather than replacing a scrambling code. Because orthogonality between channel codes is far greater than orthogonality between scrambling codes, compared with a manner of replacing a scrambling code in the prior art, the technical solution of the present invention can reduce cell interference caused by compressed mode starting, thereby reducing transmit power of a cell or increasing a throughput rate of a cell.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

## Claims

1. A compressed mode starting method, comprising:
acquiring(101),when a network side device determines that a terminal device needs to start a compressed mode by spreading factor SF/2, by the network side device from a channel code of a cell in which the terminal device is located, a second channel code that is idle and that has an SF the same as that of a father channel code of a first channel code, wherein the first channel code is a channel code used by a dedicated physical channel DPCH of the terminal device; and
sending(102), by the network side device, the second channel code to the terminal device, so that the terminal device configures the second channel code as the channel code that is used by the DPCH; and sending instruction information to the terminal device, so as to instruct the terminal device to start the compressed mode by SF/2 after the terminal device configures the second channel code as the channel code that is used by the DPCH.

2. The compressed mode starting method according to claim 1, wherein when a network side device determines that a terminal device needs to start a compressed mode by spreading factor SF/2, acquiring, by the network side device from a channel code of a cell in which the terminal device is located, a second channel code that is idle and that has an SF the same as that of a father channel code of a first channel code comprises:
when the network side device determines that the terminal device needs to start the compressed mode by SF/2 and the network side device determines that a neighboring channel code of the first channel code is occupied, acquiring, by the network side device from the channel code of the cell in which the terminal device is located, the second channel code that is idle and that has an SF the same as that of the father channel code of the first channel code.

3. The compressed mode starting method according to claim 1 or 2, wherein the sending, by the network side device, the second channel code to the terminal device, so that the terminal device configures the second channel code as the channel code that is used by the DPCH; and sending instruction information to the terminal device, so as to instruct the terminal device to start the compressed mode by SF/2 after the terminal device configures the second channel code as the channel code that is used by the DPCH, comprises:
sending, by the network side device, a first physical channel reconfiguration message to the terminal device, wherein the first physical channel reconfiguration message carries the second channel code and the instruction information, so that the terminal device reconfigures the second channel code as the channel code that is used by the DPCH, and starts the compressed mode by SF/2 after the terminal device reconfigures the second channel code as the channel code that is used by the DPCH.

4. The compressed mode starting method according to claim 1 or 2, wherein the sending, by the network side device, the second channel code to the terminal device, so that the terminal device configures the second channel code as the channel code that is used by the DPCH; and sending instruction information to the terminal device, so as to instruct the terminal device to start the compressed mode by SF/2 after the terminal device configures the second channel code as the channel code that is used by the DPCH, comprises:
sending, by the network side device, a second physical channel reconfiguration message to the terminal device, wherein the second physical channel reconfiguration message carries the second channel code, so that the terminal device configures the second channel code as the channel code that is used by the DPCH; and
sending, by the network side device, a third physical channel reconfiguration message to the terminal device, wherein the third physical channel reconfiguration message carries the instruction information, so as to instruct the terminal device to start the compressed mode by SF/2 after the terminal device configures the second channel code as the channel code that is used by the DPCH.

5. A compressed mode starting method, comprising:
Receiving(801), by a terminal device, a second channel code sent by a network side device, and receiving instruction information sent by the network side device, wherein the second channel code is a channel code that is idle, that has an SF the same as that of a father channel code of a first channel code, and that is acquired, when the network side device determines that the terminal device needs to start a compressed mode by spreading factor SF/2, by the network side device from a channel code of a cell in which the terminal device is located; and the first channel code is a channel code used by a dedicated physical channel DPCH of the terminal device;
Configuring(802), by the terminal device according to the second channel code, the second channel code as the channel code that is used by the DPCH; and
starting(803),after the terminal device configures the second channel code as the channel code that is used by the DPCH, by the terminal device, the compressed mode by SF/2 according to the instruction information.

6. The compressed mode starting method according to claim 5, wherein the receiving, by a terminal device, a second channel code sent by a network side device, and receiving instruction information sent by the network side device comprises:
receiving, by the terminal device, a first physical channel reconfiguration message sent by the network side device, wherein the first physical channel reconfiguration message carries the second channel code and the instruction information.

7. The compressed mode starting method according to claim 5, wherein the receiving, by a terminal device, a second channel code sent by a network side device, and receiving instruction information sent by the network side device comprises:
receiving, by the terminal device, a second physical channel reconfiguration message sent by the network side device, wherein the second physical channel reconfiguration message carries the second channel code; and
receiving, by the terminal device, a third physical channel reconfiguration message sent by the network side device, wherein the third physical channel reconfiguration message carries the instruction information.

8. A network side device, comprising:
an acquiring module(91), configured to: when it is determined that a terminal device needs to start a compressed mode by spreading factor SF/2, acquire, from a channel code of a cell in which the terminal device is located, a second channel code that is idle and that has an SF the same as that of a father channel code of a first channel code, wherein the first channel code is a channel code used by a dedicated physical channel DPCH of the terminal device; and
a sending module(92), configured to send the second channel code to the terminal device, so that the terminal device configures the second channel code as the channel code that is used by the DPCH; and send instruction information to the terminal device, so as to instruct the terminal device to start the compressed mode by SF/2 after the terminal device configures the second channel code as the channel code that is used by the DPCH.

9. The network side device according to claim 8, wherein the acquiring module(91) is specifically configured to: when it is determined that the terminal device needs to start the compressed mode by SF/2 and it is determined that a neighboring channel code of the first channel code is occupied, acquire, from the channel code of the cell in which the terminal device is located, the second channel code that is idle and that has an SF the same as that of the father channel code of the first channel code.

10. The network side device according to claim 8 or 9, the sending module(92) is specifically configured to send a first physical channel reconfiguration message to the terminal device, wherein the first physical channel reconfiguration message carries the second channel code and the instruction information, so that the terminal device configures the second channel code as the channel code that is used by the DPCH, and starts the compressed mode by SF/2 after the terminal device configures the second channel code as the channel code that is used by the DPCH.

11. The network side device according to claim 8 or 9, the sending module(92) is specifically configured to send a second physical channel reconfiguration message to the terminal device, wherein the second physical channel reconfiguration message carries the second channel code, so that the terminal device configures the second channel code as the channel code that is used by the DPCH; and send a third physical channel reconfiguration message to the terminal device, wherein the third physical channel reconfiguration message carries the instruction information, so as to instruct the terminal device to start the compressed mode by SF/2 after the terminal device configures the second channel code as the channel code that is used by the DPCH.

12. The network side device according to any one of claims 8 to 11, wherein the instruction information comprises a compressed mode starting identifier and starting time, wherein the compressed mode starting identifier is used to instruct the terminal device to start the compressed mode by SF/2, and the starting time is used to indicate a time when the terminal device starts the compressed mode by SF/2 after the terminal device configures the second channel code as the channel code that is used by the DPCH.

13. A terminal device, comprising:
a receiving module(1101), configured to receive a second channel code sent by a network side device, and receive instruction information sent by the network side device, wherein the second channel code is a channel code that is idle, that has an SF the same as that of a father channel code of a first channel code, and that is acquired, when the network side device determines that the terminal device needs to start a compressed mode by spreading factor SF/2, by the network side device from a channel code of a cell in which the terminal device is located; and the first channel code is a channel code used by a dedicated physical channel DPCH of the terminal device;
a configuring module(1102), configured to configure, according to the second channel code, the second channel code as the channel code that is used by the DPCH; and
a starting module(1103), configured to start the compressed mode by SF/2 according to the instruction information after the configuring module(1102) configures the second channel code as the channel code that is used by the DPCH.

14. The terminal device according to claim 13, wherein the receiving module(1101) is specifically configured to receive a first physical channel reconfiguration message sent by the network side device, wherein the first physical channel reconfiguration message carries the second channel code and the instruction information.

15. The terminal device according to claim 13, wherein the receiving module(1101) is specifically configured to receive a second physical channel reconfiguration message sent by the network side device, wherein the second physical channel reconfiguration message carries the second channel code; and receive a third physical channel reconfiguration message sent by the network side device, wherein the third physical channel reconfiguration message carries the instruction information.

## Patentansprüche

1. Kompressionsmodusstartverfahren, umfassend:
Erfassen (101), wenn eine netzseitige Vorrichtung bestimmt, dass ein Endgerät einen Kompressionsmodus mit Spreizfaktor SF/2 starten muss, durch die netzseitige Vorrichtung aus einem Kanalcode einer Zelle, in der sich das Endgerät aufhält, eines zweiten Kanalcodes, der unbelegt ist und einen SF aufweist, der derselbe wie jener eines Vaterkanalcodes eines ersten Kanalcodes ist, wobei der erste Kanalcode ein Kanalcode ist, der durch einen dedizierten physikalischen Kanal DPCH des Endgeräts verwendet wird; und
Senden (102) des zweiten Kanalcodes durch die netzseitige Vorrichtung zu dem Endgerät, so dass das Endgerät den zweiten Kanalcode als den Kanalcode, der von dem DPCH verwendet wird, konfiguriert; und Senden von Anweisungsinformationen an das Endgerät, um das Endgerät anzuweisen, den Kompressionsmodus mit SF/2 zu starten, nachdem das Endgerät den zweiten Kanalcode als den Kanalcode, der von dem DPCH verwendet wird, konfiguriert hat.

2. Kompressionsmodusstartverfahren nach Anspruch 1, wobei, wenn eine netzseitige Vorrichtung bestimmt, dass ein Endgerät einen Kompressionsmodus mit Spreizfaktor SF/2 starten muss, Erfassen, durch die netzseitige Vorrichtung von einem Kanalcode einer Zelle, in der sich das Endgerät aufllält, eines zweiten Kanalcodes, der unbelegt ist und einen SF aufweist, der derselbe wie jener eines Vaterkanalcodes eines ersten Kanalcodes ist, umfasst:
wenn die netzseitige Vorrichtung bestimmt, dass das Endgerät den Kompressionsmodus mit SF/2 starten muss, und die netzseitige Vorrichtung bestimmt, dass ein benachbarter Kanalcode des ersten Kanalcodes belegt ist, Erfassen, durch die netzseitige Vorrichtung von dem Kanalcode der Zelle, in der sich das Endgerät aufhält, des zweiten Kanalcodes, der unbelegt ist und einen SF aufweist, der derselbe wie jener des Vaterkanalcodes des ersten Kanalcodes ist.

3. Kompressionsmodusstartverfahren nach Anspruch 1 oder 2, wobei das Senden des zweiten Kanalcodes durch die netzseitige Vorrichtung zu dem Endgerät, so dass das Endgerät den zweiten Kanalcode als den Kanalcode, der von dem DPCH verwendet wird, konfiguriert; und das Senden von Anweisungsinformationen an das Endgerät, um das Endgerät anzuweisen, den Kompressionsmodus mit SF/2 zu starten, nachdem das Endgerät den zweiten Kanalcode als den Kanalcode, der von dem DPCH verwendet wird, konfiguriert hat, umfasst:
Senden einer ersten physikalischen Kanalneukonfigurationsnachricht durch die netzseitige Vorrichtung an das Endgerät, wobei die erste physikalische Kanal-Neukonfigurationsnachricht den zweiten Kanalcode und die Anweisungsinformationen enthält, so dass das Endgerät den zweiten Kanalcode als den Kanalcode, der von dem DPCH verwendet wird, neu konfiguriert und den Kompressionsmodus mit SF/2 startet, nachdem das Endgerät den zweiten Kanalcode als den Kanalcode, der von dem DPCH verwendet wird, neu konfiguriert hat.

4. Kompressionsmodusstartverfahren nach Anspruch 1 oder 2, wobei das Senden des zweiten Kanalcodes durch die netzseitige Vorrichtung an das Endgerät, so dass das Endgerät den zweiten Kanalcode als den Kanalcode, der von dem DPCH verwendet wird, konfiguriert; und das Senden von Anweisungsinformationen an das Endgerät, um das Endgerät anzuweisen, den Kompressionsmodus mit SF/2 zu starten, nachdem das Endgerät den zweiten Kanalcode als den Kanalcode, der von dem DPCH verwendet wird, konfiguriert hat, umfasst:
Senden einer zweiten physikalischen Kanalneukonfigurationsnachricht durch die netzseitige Vorrichtung an das Endgerät, wobei die zweite physikalische Kanalneukonfigurationsnachricht den zweiten Kanalcode enthält, so dass das Endgerät den zweiten Kanalcode als den Kanalcode, der von dem DPCH verwendet wird, konfiguriert; und
Senden einer dritten physikalischen Kanalneukonfigurationsnachricht durch die netzseitige Vorrichtung an das Endgerät, wobei die dritte physikalische Kanalneukonfigurationsnachricht die Anweisungsinformationen enthält, um das Endgerät anzuweisen, den Kompressionsmodus mit SF/2 zu starten, nachdem das Endgerät den zweiten Kanalcode als den Kanalcode, der von dem DPCH verwendet wird, konfiguriert hat.

5. Kompressionsmodusstartverfahren, umfassend:
Empfangen (801) eines zweiten Kanalcodes, der durch eine netzseitige Vorrichtung gesendet wird, durch ein Endgerät, und Empfangen von Anweisungsinformationen, die durch die netzseitige Vorrichtung gesendet werden, wobei der zweite Kanalcode ein Kanalcode ist, der unbelegt ist, der einen SF aufweist, der derselbe wie jener eines Vaterkanalcodes eines ersten Kanalcodes ist, und der, wenn die netzseitige Vorrichtung bestimmt, dass das Endgerät einen Kompressionsmodus mit Spreizfaktor SF/2 starten muss, durch die netzseitige Vorrichtung von einem Kanalcode einer Zelle, in der sich das Endgerät aufhält, erfasst wird; und der erste Kanalcode ein Kanalcode ist, der von einem dedizierten physikalischen Kanal DPCH des Endgeräts verwendet wird;
Konfigurieren (802), durch das Endgerät gemäß dem zweiten Kanalcode, des zweiten Kanalcodes als den Kanalcode, der von dem DPCH verwendet wird; und
Starten (803), nachdem das Endgerät den zweiten Kanalcode als den Kanalcode, der von dem DPCH verwendet wird, konfiguriert hat, des Kompressionsmodus mit SF/2 gemäß den Anweisungsinformationen durch das Endgerät.

6. Kompressionsmodusstartverfahren nach Anspruch 5, wobei das Empfangen eines zweiten Kanalcodes, der durch eine netzseitige Vorrichtung gesendet wird, durch ein Endgerät und das Empfangen von Anweisungsinformationen, die durch die netzseitige Vorrichtung gesendet werden, umfasst:
Empfangen einer ersten physikalischen Kanalneukonfigurationsnachricht, die durch die netzseitige Vorrichtung gesendet wird, durch das Endgerät, wobei die erste physikalische Kanalneukonfigurationsnachricht den zweiten Kanalcode und die Anweisungsinformationen enthält.

7. Kompressionsmodusstartverfahren nach Anspruch 5, wobei das Empfangen eines zweiten Kanalcodes, der durch eine netzseitige Vorrichtung gesendet wird, durch ein Endgerät und das Empfangen von Anweisungsinformationen, die durch die netzseitige Vorrichtung gesendet werden, umfasst:
Empfangen einer zweiten physikalischen Kanalneukonfigurierungsnachricht, die durch die netzseitige Vorrichtung gesendet wird, durch das Endgerät, wobei die zweite physikalische Kanalneukonfigurierungsnachricht den zweiten Kanalcode enthält; und
Empfangen einer dritten physikalischen Kanalneukonfigurierungsnachricht, die durch die netzseitige Vorrichtung gesendet wird, durch das Endgerät, wobei die dritte physikalische Kanalneukonfigurierungsnachricht die Anweisungsinformationen enthält.

8. Netzseitige Vorrichtung, die Folgendes umfasst:
ein Erfassungsmodul (91), das konfiguriert ist, um: wenn bestimmt wird, dass ein Endgerät einen Kompressionsmodus mit Spreizfaktor SF/2 starten muss, von einem Kanalcode einer Zelle, in der sich das Endgerät aufhält, einen zweiten Kanalcode, der unbelegt ist und einen SF aufweist, der derselbe wie jener eines Vaterkanalcodes eines ersten Kanalcodes ist, zu erfassen, wobei der erste Kanalcode ein Kanalcode ist, der von einem dedizierten physikalischen Kanal DPCH des Endgeräts verwendet wird; und
ein Sendemodul (92), das konfiguriert ist, um den zweiten Kanalcode an das Endgerät zu senden, so dass das Endgerät den zweiten Kanalcode als den Kanalcode, der von dem DPCH verwendet wird, konfiguriert; und Anweisungsinformationen an das Endgerät zu senden, um das Endgerät anzuweisen, den Kompressionsmodus mit SF/2 zu starten, nachdem das Endgerät den zweiten Kanalcode als den Kanalcode, der von dem DPCH verwendet wird, konfiguriert hat.

9. Netzseitige Vorrichtung nach Anspruch 8, wobei das Erfassungsmodul (91) spezifisch dazu konfiguriert ist: wenn bestimmt wird, dass das Endgerät den Kompressionsmodus mit SF/2 starten muss, und bestimmt wird, dass ein benachbarter Kanalcode des ersten Kanalcodes belegt ist, von dem Kanalcode der Zelle, in dem sich das Endgerät aufhält, den zweiten Kanalcode zu erfassen, der unbelegt ist und einen SF aufweist, der derselbe wie jener des Vaterkanalcodes des ersten Kanalcodes ist.

10. Netzseitige Vorrichtung nach Anspruch 8 oder 9, wobei das Sendemodul (92) spezifisch dazu konfiguriert ist, eine erste physikalische Kanalneukonfigurationsnachricht an das Endgerät zu senden, wobei die erste physikalische Kanalneukonfigurationsnachricht den zweiten Kanalcode und die Anweisungsinformationen enthält, so dass das Endgerät den zweiten Kanalcode als den Kanalcode, der von dem DPCH verwendet wird, konfiguriert und den Kompressionsmodus mit SF/2 startet, nachdem das Endgerät den zweiten Kanalcode als den Kanalcode, der von dem DPCH verwendet wird, konfiguriert hat.

11. Netzseitige Vorrichtung nach Anspruch 8 oder 9, wobei das Sendemodul (92) spezifisch dazu konfiguriert ist, eine zweite physikalische Kanalneukonfigurationsnachricht an das Endgerät zu senden, wobei die zweite physikalische Kanalneukonfigurationsnachricht den zweiten Kanalcode enthält, so dass das Endgerät den zweiten Kanalcode als den Kanalcode, der von dem DPCH verwendet wird, konfiguriert; und eine dritte physikalische Kanalneukonfigurationsnachricht an das Endgerät zu senden, wobei die dritte physikalische Kanalneukonfigurationsnachricht die Anweisungsinformationen enthält, um das Endgerät anzuweisen, den Kompressionsmodus mit SF/2 zu starten, nachdem das Endgerät den zweiten Kanalcode als den Kanalcode, der von dem DPCH verwendet wird, konfiguriert hat.

12. Netzseitige Vorrichtung nach einem beliebigen der Ansprüche 8 bis 11, wobei die Anweisungsinformationen eine Kompressionsmodusstartkennung und -startzeit umfassen, wobei die Kompressionsmodusstartkennung dazu verwendet wird, das Endgerät anzuweisen, den Kompressionsmodus mit SF/2 zu starten, und die Startzeit dazu verwendet wird, einen Zeitpunkt anzugeben, wann das Endgerät den Kompressionsmodus mit SF/2 startet, nachdem das Endgerät den zweiten Kanalcode als den Kanalcode, der von dem DPCH verwendet wird, konfiguriert hat.

13. Endgerät, das Folgendes umfasst:
ein Empfangsmodul (1101), das dazu konfiguriert ist, einen zweiten Kanalcode zu empfangen, der von einer netzseitigen Vorrichtung gesendet wird, und Anweisungsinformationen zu empfangen, die von der netzseitigen Vorrichtung gesendet werden, wobei der zweite Kanalcode ein Kanalcode ist, der unbelegt ist, der einen SF aufweist, der derselbe wie jener eines Vaterkanalcodes eines ersten Kanalcodes ist, und der, wenn die netzseitige Vorrichtung bestimmt, dass das Endgerät einen Kompressionsmodus mit Spreizfaktor SF/2 starten muss, von der netzseitigen Vorrichtung von einem Kanalcode einer Zelle, in der sich das Endgerät aufhält, erfasst wird; und der erste Kanalcode ein Kanalcode ist, der von einem dedizierten physikalischen Kanal DPCH des Endgeräts verwendet wird;
ein Konfiguriermodul (1102), das dazu konfiguriert ist, den zweiten Kanalcode als den Kanalcode, der von dem DPCH verwendet wird, gemäß dem zweiten Kanalcode zu konfigurieren; und
ein Startmodul (1103), das dazu konfiguriert ist, den Kompressionsmodus mit SF/2 gemäß den Anweisungsinformationen zu starten, nachdem das Konfiguriermodul (1102) den zweiten Kanalcode als den Kanalcode, der von dem DPCH verwendet wird, konfiguriert hat.

14. Endgerät nach Anspruch 13, wobei das Empfangsmodul (1101) spezifisch dazu konfiguriert ist, eine erste physikalische Kanalneukonfigurierungsnachricht, die von der netzseitigen Vorrichtung gesendet wird, zu empfangen, wobei die erste physikalische Kanalneukonfigurierungsnachricht den zweiten Kanalcode und die Anweisungsinformationen enthält.

15. Endgerät nach Anspruch 13, wobei das Empfangsmodul (1101) spezifisch dazu konfiguriert ist, eine zweite physikalische Kanalneukonfigurierungsnachricht zu empfangen, die von der netzseitigen Vorrichtung gesendet wird, wobei die zweite physikalische Kanalneukonfigurierungsnachricht den zweiten Kanalcode enthält; und eine dritte physikalische Kanalneukonfigurierungsnachricht zu empfangen, die von der netzseitigen Vorrichtung gesendet wird, wobei die dritte physikalische Kanalneukonfigurierungsnachricht die Anweisungsinformationen enthält.

## Revendications

1. Procédé d'activation de mode compressé, comprenant :
l'acquisition (101), quand un dispositif du côté réseau détermine qu'un dispositif terminal a besoin d'activer un mode compressé par un facteur de diffusion de SF/2, par le dispositif du côté réseau à partir d'un code de canal d'une cellule dans laquelle est situé le dispositif terminal, d'un deuxième code de canal qui est inactif et qui a un SF identique à celui d'un code de canal père d'un premier code de canal, dans lequel le premier code de canal est un code de canal utilisé par un canal physique dédié DPCH du dispositif terminal ; et
l'envoi (102), par le dispositif du côté réseau, du deuxième code de canal au dispositif terminal, de façon que le dispositif terminal configure le deuxième code de canal en tant que code de canal qui est utilisé par le DPCH ; et l'envoi d'informations d'instruction au dispositif terminal, de façon que le dispositif terminal reçoive l'instruction d'activer le mode compressé par SF/2 après que le dispositif terminal a configuré le deuxième code de canal en tant que code de canal qui est utilisé par le DPCH.

2. Procédé d'activation de mode compressé selon la revendication 1, dans lequel, quand un dispositif du côté réseau détermine qu'un dispositif terminal a besoin d'activer un mode compressé par un facteur de diffusion de SF/2, l'acquisition, par le dispositif du côté réseau à partir d'un code de canal d'une cellule dans laquelle est situé le dispositif terminal, d'un deuxième code de canal qui est inactif et qui a un SF identique à celui d'un code canal père d'un premier code de canal comprend :
quand le dispositif du côté réseau détermine que le dispositif terminal a besoin d'activer le mode compressé par SF/2 et le dispositif du côté réseau détermine qu'un code de canal voisin du premier code de canal est occupé, l'acquisition, par le dispositif du côté réseau, à partir du code de canal de la cellule dans laquelle est situé le dispositif terminal, du deuxième code de canal qui est inactif et qui a un SF identique à celui du code de canal père du premier code de canal.

3. Procédé d'activation de mode compressé selon la revendication 1 ou 2, dans lequel l'envoi, par le dispositif du côté réseau, du deuxième code de canal au dispositif terminal, de façon que le dispositif terminal configure le deuxième code de canal en tant que code de canal qui est utilisé par le DPCH ; et l'envoi d'informations d'instruction au dispositif terminal, de façon que le dispositif terminal reçoive l'instruction d'activer le mode compressé par SF/2 après que le dispositif terminal a configuré le deuxième code de canal en tant que code de canal qui est utilisé par le DPCH, comprennent :
l'envoi, par le dispositif du côté réseau, d'un premier message de reconfiguration de canal physique au dispositif terminal, dans lequel le premier message de reconfiguration de canal physique transporte le deuxième code de canal et les informations d'instruction, de façon que le dispositif terminal reconfigure le deuxième code de canal en tant que code de canal qui est utilisé pour le DPCH, et active le mode compressé par SF/2 après que le dispositif terminal a reconfiguré le deuxième code de canal en tant que code de canal qui est utilisé par le DPCH.

4. Procédé d'activation de mode compressé selon la revendication 1 ou 2, dans lequel l'envoi, par le dispositif du côté réseau, du deuxième code de canal au dispositif terminal, de façon que le dispositif terminal configure le deuxième code de canal en tant que code de canal qui est utilisé par le DPCH ; et l'envoi d'informations d'instruction au dispositif terminal, de façon que le dispositif terminal reçoive l'instruction d'activer le mode compressé par SF/2 après que le dispositif terminal a configuré le deuxième code de canal en tant que code de canal qui est utilisé par le DPCH, comprennent :
l'envoi, par le dispositif du côté réseau, d'un deuxième message de reconfiguration de canal physique au dispositif terminal, dans lequel le deuxième message de reconfiguration de canal physique transporte le deuxième code de canal, de façon que le dispositif terminal configure le deuxième code de canal en tant que code de canal qui est utilisé par le DPCH ; et
l'envoi, par le dispositif du côté réseau, d'un troisième message de reconfiguration de canal physique au dispositif terminal, dans lequel le troisième message de reconfiguration de canal physique transporte les informations d'instruction, de façon que le dispositif terminal reçoive l'instruction d'activer le mode compressé par SF/2 après que le dispositif terminal a configuré le deuxième code de canal en tant que code de canal qui est utilisé par le DPCH.

5. Procédé d'activation de mode compressé comprenant :
la réception (801), par un dispositif terminal, d'un deuxième code de canal envoyé par un dispositif du côté réseau, et la réception d'informations d'instruction envoyées par le dispositif du côté réseau, dans lequel le deuxième code de canal est un code de canal qui est inactif, qui a un SF identique à celui d'un code de canal père d'un premier code de canal, et qui est acquis, quand le dispositif du côté réseau détermine que le dispositif terminal a besoin d'activer un mode compressé par un facteur de diffusion de SF/2, par le dispositif du côté réseau à partir d'un code de canal d'une cellule dans laquelle est situé le dispositif terminal ; et le premier code de canal est un code de canal utilisé par un canal physique dédié DPCH du dispositif terminal ;
la configuration (802), par le dispositif terminal en fonction du deuxième code de canal, du deuxième code de canal en tant que code de canal qui est utilisé par le DPCH ; et
l'activation (803), après que le dispositif terminal a configuré le deuxième code de canal en tant que code de canal qui est utilisé par le DPCH, par le dispositif terminal, du mode compressé par SF/2 en fonction des informations d'instruction.

6. Procédé d'activation de mode compressé selon la revendication 5, dans lequel la réception, par un dispositif terminal, d'un deuxième code de canal envoyé par un dispositif du côté réseau, et la réception d'informations d'instruction envoyées par le dispositif du côté réseau, comprennent :
la réception, par le dispositif terminal, d'un premier message de reconfiguration de canal physique envoyé par le dispositif du côté réseau, dans lequel le premier message de reconfiguration de canal physique transporte le deuxième code de canal et les informations d'instruction.

7. Procédé d'activation de mode compressé selon la revendication 5, dans lequel la réception, par un dispositif terminal, d'un deuxième code de canal envoyé par un dispositif du côté réseau, et la réception d'informations d'instruction envoyées par le dispositif du côté réseau, comprennent :
la réception, par le dispositif terminal, d'un deuxième message de reconfiguration de canal physique envoyé par le dispositif du côté réseau, dans lequel le deuxième message de reconfiguration de canal physique transporte le deuxième code de canal ; et
la réception, par le dispositif terminal, d'un troisième message de reconfiguration de canal physique envoyé par le dispositif du côté réseau, dans lequel le troisième message de reconfiguration de canal physique transporte les informations d'instruction.

8. Dispositif du côté réseau comprenant :
un module d'acquisition (91), configuré pour : lorsqu'il est déterminé qu'un dispositif terminal a besoin d'activer un mode compressé par un facteur de diffusion de SF/2, acquérir, à partir d'un code de canal d'une cellule dans lequel est situé le dispositif terminal, un deuxième code de canal qui est inactif et qui a un SF identique à celui d'un code de canal père d'un premier code de canal, dans lequel le premier code de canal est un code de canal utilisé par un canal physique dédié DPCH du dispositif terminal ; et
un module d'envoi (92), configuré pour envoyer le deuxième code de canal au dispositif terminal, de façon que le dispositif terminal configure le deuxième code de canal en tant que code de canal qui est utilisé par le DPCH ; et envoyer des informations d'instruction au dispositif terminal, de façon que le dispositif terminal reçoive l'instruction d'activer le mode compressé par SF/2 après que le dispositif terminal a configuré le deuxième code de canal en tant que code de canal qui est utilisé par le DPCH.

9. Dispositif du côté réseau selon la revendication 8, dans lequel le module d'acquisition (91) est spécifiquement configuré pour : lorsqu'il est déterminé que le dispositif terminal a besoin d'activer le mode compressé par SF/2, et qu'il est déterminé qu'un code de canal voisin du premier code de canal est occupé, acquérir, à partir du code de canal de la cellule dans laquelle est situé le dispositif terminal, le deuxième code de canal qui est inactif et qui a un SF identique à celui du code de canal père du premier code de canal.

10. Dispositif du côté réseau selon la revendication 8 ou 9, dans lequel le module d'envoi (92) est spécifiquement configuré pour envoyer un premier message de reconfiguration de canal physique au dispositif terminal, et dans lequel le premier message de reconfiguration de canal physique transporte le deuxième code de canal et les informations d'instruction, de façon que le dispositif terminal configure le deuxième code de canal en tant que code de canal qui est utilisé par le DPCH, et active le mode compressé par SF/2 après que le dispositif terminal a configuré le deuxième code de canal en tant que code de canal qui est utilisé par le DPCH.

11. Dispositif du côté réseau selon la revendication 8 ou 9, dans lequel le module d'envoi (92) est spécifiquement configuré pour envoyer un deuxième message de reconfiguration de canal physique au dispositif terminal, dans lequel le deuxième message de reconfiguration de canal physique transporte le deuxième code de canal, de façon que le dispositif terminal configure le deuxième code de canal en tant que code de canal qui est utilisé par le DPCH ; et envoyer un troisième message de reconfiguration de canal physique au dispositif terminal, dans lequel le troisième message de reconfiguration de canal physique transporte les informations d'instruction, de façon que le dispositif terminal reçoive l'instruction d'activer le mode compressé par SF/2 après que le dispositif terminal a configuré le deuxième code de canal en tant que code de canal qui est utilisé par le DPCH.

12. Dispositif du côté réseau selon l'une quelconque des revendications 8 à 11, dans lequel les informations d'instruction comprennent un identificateur d'activation de mode compressé et un moment d'activation, et dans lequel l'identificateur d'activation de mode compressé est utilisé pour envoyer au dispositif terminal une instruction d'activer le mode compressé par SF/2, et le moment d'activation est utilisé pour indiquer un moment auquel le dispositif terminal active le mode compressé par SF/2 après que le dispositif terminal a configuré le deuxième code de canal en tant que code de canal qui est utilisé par le DPCH.

13. Dispositif terminal comprenant :
un module de réception (1101), configuré pour recevoir un deuxième code de canal envoyé par un dispositif du côté réseau, et recevoir des informations d'instruction envoyées par le dispositif du côté réseau, dans lequel le deuxième code de canal est un code de canal qui est inactif, qui a un SF identique à celui d'un code de canal père d'un premier code de canal, et qui est acquis, quand le dispositif du côté réseau détermine que le dispositif terminal a besoin d'activer un mode compressé par un facteur de diffusion de SF/2, par le dispositif du côté réseau à partir d'un code de canal d'une cellule dans laquelle est situé le dispositif terminal ; et le premier code de canal est un code de canal utilisé par un canal physique dédié DPCH du dispositif terminal ;
un module de configuration (1102), configuré pour configurer, en fonction du deuxième code de canal, le deuxième code de canal en tant que code de canal qui est utilisé par le DPCH ; et
un module d'activation (1103), configuré pour activer le mode compressé par SF/2 en fonction des informations d'instruction après que le module de configuration (1102) a configuré le deuxième code de canal en tant que code de canal qui est utilisé par le DPCH.

14. Dispositif terminal selon la revendication 13, dans lequel le module de réception (1101) est spécifiquement configuré pour recevoir un premier message de reconfiguration de canal physique envoyé par le dispositif du côté réseau, et dans lequel le premier message de reconfiguration de canal physique transporte le deuxième code de canal et les informations d'instruction.

15. Dispositif terminal selon la revendication 13, dans lequel le module de réception (1101) est spécifiquement configuré pour recevoir un deuxième message de reconfiguration de canal physique envoyé par le dispositif du côté réseau, dans lequel le deuxième message de reconfiguration de canal physique transporte le deuxième code de canal ; et recevoir un troisième message de reconfiguration de canal physique envoyé par le dispositif du côté réseau, dans lequel le troisième message de reconfiguration de canal physique transporte les informations d'instruction.
